# EUROPEAN PATENT SPECIFICATION

(11) **EP 3 779 238 B1**
(45) Date of publication and mention of the grant of the patent: **23.03.2022**
(21) Application number: 18914723.4
(22) Date of filing: 10.04.2018
(51) Int. Cl.: F16H 47/04

(54) **A HYDRO-MECHANICAL CONTINUOUSLY VARIABLE TRANSMISSION APPARATUS WITH THREE RANGES FOR CONSTRUCTION MACHINERY**
HYDROMECANISCHES STUFENLOSES GETRIEBE MIT DREI FAHRBEREICHEN FÜR BAUMASCHINE
TRANSMISSION HYDROMÉCANIQUE À VARIATION CONTINUE AVEC TROIS PLAGES DE VITESSE POUR ENGIN DE CONSTRUCTION

(43) Date of publication of application: 17.02.2021
(73) Proprietor: Beijing Institute Of Technology, Beijing 100081 (CN)
(72) Inventor: PENG, Zengxiong, Beijing 100081 (CN); HU, Jibin, Beijing 100081 (CN); JING, Chongbo, Beijing 100081 (CN); WU, Wei, Beijing 100081 (CN); ZHOU, Junjie, Beijing 100081 (CN); WEI, Chao, Beijing 100081 (CN)
(74) Representative: Swea IP Law AB
(86) International application number: PCT/CN2018/082412
(87) International publication number: WO 2019/195992

(56) References cited:
- EP-A1- 2 461 073
- EP-A1- 3 040 586
- CN-A- 107 143 637
- CN-A- 107 246 467
- CN-A- 107 869 563
- CN-A- 108 278 348
- CN-U- 201 615 200
- CN-Y- 2 818 924
- US-A- 3 709 060
- US-A- 4 121 479
- US-A1- 2011 021 302
- US-A1- 2012 174 704

## Description

### TECHNICAL FIELD

The present invention belongs to a field of power transmission technology, and relates to a continuously variable transmission apparatus, and more specifically, to a hydro-mechanical continuously variable transmission apparatus with three ranges for construction machinery.

### BACKGROUND ART

Currently, hydro-mechanical power shift transmissions are generally used in a construction machinery loader. For needs of loading operations, a speed of the loader and a load of an engine are changed severely, and the hydraulic torque converter has low efficiency, thus a transmission system has a transmission efficiency of about 75% at most.

The hydrostatic transmission can easily achieve a continuously variable speed regulation, so that a loader engine often operates at a range of economical rotation speed, to improve an energy utilization efficiency of the whole loader. However, since a closed speed regulation circuit via hydraulic pump or motor used in the hydrostatic transmission has low efficiency, the improvement potential of the hydrostatic transmission is limited as compared with the power shift hydro-mechanical transmission.

The hydro-mechanical transmission can achieve an efficient continuously variable transmission by a combination of mechanical power and hydraulic power, to maintain a stable load on the engine and in turn help to improve fuel economy, and become one of the development trends of the loader transmission system. Construction machinery manufacturers at home and abroad actively develop research on the transmission technology.

Dana Rexroth Corporation's patent application No. US 2014/0305113 A1 discloses a two-range hydro-mechanical transmission apparatus, in which a pure hydraulic range is configured for starting and the hydro-mechanical range is configured for working and running. Dana Rexroth Corporation's patent No. EP 2,280,192 B1 discloses a three-range hydro-mechanical transmission apparatus, in which a pure hydraulic range is configured for starting, and two hydraulic mechanical ranges is configured for working and running respectively, to obtain a higher transmission efficiency. However, in both the solutions, the starting is performed by the hydraulic range whose efficiency is lower than that of the hydro-mechanical range.

ZF Corporation's patent No. US 8328676 B2 discloses a hydraulic mechanical transmission apparatus for a loader, the apparatus uses two or three hydraulic mechanical ranges and uses a power split form of an Output split and a Compound split, and has higher transmission efficiency. However, the apparatus does not comprise three clutches on the same shaft and using the two types of power split forms leads to a higher power of the hydraulic element and a higher cost.

### SUMMARY

It is provided a hydro-mechanical continuously variable transmission apparatus with three ranges for construction machinery according to the present invention, which cancels a pure hydraulic range with low efficiency, and employs three hydraulic mechanical ranges for low-speed working, medium-speed running and high-speed running respectively. The speeds of hydraulic elements for three working ranges continuously changes, required powers of the hydraulic elements is small, the apparatus is simple in operation, and has a high transmission efficiency. A reverse gear position includes two hydraulic mechanical ranges to meet a requirement for a speed of backing the engineering machinery.

The technical solution of the present invention is as follows:
A hydro-mechanical continuously variable transmission apparatus with three ranges for construction machinery, includes a housing, a main input shaft, a main output shaft, a hydraulic pump and a hydraulic motor. A first end of the main input shaft is in power connection with an engine unit of the construction machinery, a second end of the main input shaft is in power connection with a working pump. The main input shaft penetrates through the housing, is movably connected with the housing, and is fixedly provided with a fifth gear. The main output shaft is configured to output power for running, working and steering of the construction machinery, is movably connected with the housing, and is fixedly provided with a twenty-ninth gear. A power input shaft of the hydraulic pump is movably connected with the housing, a part of the power input shaft of the hydraulic pump positioned within the housing is fixedly provided with a fourth gear engaged with the fifth gear. A power output shaft of the hydraulic motor is movably connected with the housing, and a part of the power output shaft of the hydraulic motor positioned within the housing is fixedly provided with a twenty-second gear. The hydraulic pump and the hydraulic motor form a closed hydraulic circuit

The apparatus further includes a first half shaft, a first end of the first half shaft is movably connected with the housing, and a second end of the first half shaft is fixedly provided with an eighth sun gear, the first half shaft is provided with a sixth gear engaged with the fifth gear.

The apparatus further includes a second half shaft coaxially arranged with the first half shaft, a first end of the second half shaft is movably connected with the housing, and a second end of the second half shaft is fixedly provided with a tenth sun gear; the second half shaft is provided with a K2 clutch and a K3 clutch and is rotatably provided with a seventeenth gear and a fifteenth gear, the seventeenth gear is in power connection with a driving end of the K3 clutch, and the fifteenth gear is in power connection with a driving end of the K2 clutch.

The apparatus further includes an eleventh planetary carrier provided with a plurality of seventh planetary gears and a plurality of ninth planetary gears, the seventh planetary gears are in power connection with the eighth sun gear, and the ninth planetary gears are in power connection with the tenth sun gear; the eleventh planetary carrier is fixedly connected with a K1 clutch, and an driving end of the K1 clutch is in power connection with the fifteenth gear.

The apparatus further includes a first intermediate shaft arranged in and movably connected with the housing, the first intermediate shaft is movably provided with a nineteenth gear and a twenty-first gear, the nineteenth gear is engaged with the twenty-second gear; the twenty-first gear is engaged with the fifteenth gear, the first intermediate shaft is fixedly provided with a twenty-fourth gear and a twenty-fifth gear, the twenty-fourth gear is engaged with the seventeenth gear, the twenty-fifth gear is engaged with the twenty-ninth gear, the first intermediate shaft is further provided with a KV clutch, a driving end of the KV clutch is engaged with the twenty-first gear.

The apparatus further includes a second intermediate shaft, a twenty-eighth gear fixedly arranged on the second intermediate shaft and a twenty-sixth gear rotatably arranged on the second intermediate shaft, the twenty-eighth gear is engaged with the twenty-ninth gear, the second intermediate shaft is further provided with a KR clutch, a driving end of the KR clutch is engaged with the twenty-sixth gear.

The apparatus further includes a twelfth gear and a thirteenth gear fixedly and coaxially arranged, the twelfth gear is engaged with the ninth gear, and the thirteenth gear is engaged with the nineteenth gear.

In some embodiments, the present invention further includes an oil-replenishing pump in power connection with the hydraulic pump.

Beneficial effects of the present invention are as follows:
(1) The combination of hydraulic power and mechanical power is employed, where only a part of the power is transmitted by a hydraulic path, and most of the power is transmitted by a mechanical path, so as to realize high transmission efficiency and continuously variable transmission, thereby improving working efficiency and reducing fuel consumption of an engine.
(2) It is employed a power-split mechanism composed of stepped-planet gears which are engaged at an inner and an outer, which can achieve three continuous hydraulic mechanical ranges. Range I is configured for low-speed working, range II is configured for medium-speed working and running conditions, and range III is configured for high-speed running. The hydraulic mechanical range is configured for starting to improve the transmission efficiency during low speed. One clutch needs to be manipulated to switch between ranges, to realize a smooth switching.
(3) Continuously variable speed regulation is realized, so that the engine can be operated at an economical rotation speed, thereby improving economy of fuel combustion and reducing noise of the engine.
(4) The clutches disposed between different ranges can be switched without a speed differential, improving a lifetime of a friction disc of the clutch, and simplifying design of shift logic and a operating system.
(5) By means of a hydraulic speed regulation system, a power shifting at can be realized, such power shifting engages a clutch of next range first and then releases a clutch of previous range, to ensuring uninterrupted output of power, and improve working efficiency.
(6) In addition to the power-split mechanism, other parts adopt a fixed-shaft gear transmission. On the one hand, a distance between centers of an input shaft and output shaft of the engineering machinery, such as a loader transmission apparatus, can be reduced; and on the other hand, a process and a machining cost can be reduced.

### BRIEFT DESCRIPTION OF THE DRAWINGS

Fig. 1 is a schematic diagram of a transmission connection of a hydro-mechanical continuously variable transmission apparatus of the present invention;
Fig. 2 is a plot of rotation speed of a hydraulic pump and motor of the present invention;
Fig. 3 is a plot of maximum pressure of a hydraulic pump of the present invention;
Fig. 4 is a plot of maximum output torque of the present invention; and
Fig. 5 is a plot of efficiency of the present invention.

List of reference characters: 1 housing, 2 hydraulic pump, 3 oil-replenishing pump, 4 fourth gear, 5 fifth gear, 6 sixth gear, 7 seventh planetary gear, 8 eighth sun gear, 9 ninth planetary gear, 10 tenth sun gear, 11 eleventh planetary carrier, 12 twelfth gear, 13 thirteenth gear, 14 K1 clutch, 15 fifteenth gear, 16 K2 clutch, 17 seventeenth gear, 18 K3 clutch, 19 nineteenth gear, 20 hydraulic motor, 21 twenty-first gear, 22 twenty-second gear, 23 KV clutch, 24 twenty-fourth gear, 25 twenty-fifth gear, 26 twenty-sixth gear, 27 KR clutch, 28 twenty-eighth gear,29 twenty-ninth gear, 30 main input shaft, 31 main output shaft, 32 working pump.

### DETAILED DESCRIPTION OF THE EMBODIMENTS

The technical solutions in the embodiments of the present invention will be clearly and completely described below combining with the accompanying drawings in the embodiments of the present invention, and it is obvious that the embodiments described are only a part of the embodiments of the present invention, and not all of them.

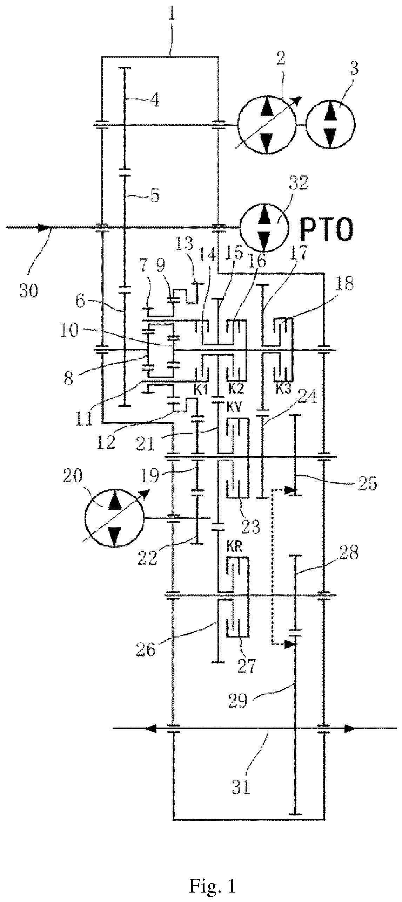

As shown in Fig. 1, it is provided a hydro-mechanical continuously variable transmission apparatus with three ranges for construction machinery of the present invention, which includes a housing 1, a main input shaft 30, a main output shaft 31, a hydraulic pump 2 and a hydraulic motor 20. A first end of the main input shaft 30 is in power connection with an engine unit of the construction machinery, and a second end of the main input shaft 30 is in power connection with a working pump 32. The main input shaft 30 penetrates through the housing 1, and is movably connected with the housing 1. The main input shaft 30 is fixedly provided with a fifth gear 5. The main output shaft 31 is configured to output power for running, working and steering of the construction machinery, and is operatively connected with the housing 1. The main output shaft 31 is fixedly provided with a twenty-ninth gear 29. A power input shaft of the hydraulic pump 2 is movably connected with the housing 1, a part of the power input shaft of the hydraulic pump 2 positioned within the housing 1 is fixedly provided with a fourth gear 4 engaged with the fifth gear 5. A power output shaft of the hydraulic motor 20 is movably connected with the housing 1. A part of the power output shaft of the hydraulic motor 20 positioned within the housing 1 is fixedly provided with a twenty-second gear 22. The hydraulic pump 2 and the hydraulic motor 20 form a closed hydraulic circuit. The apparatus further includes a first half shaft, a first end of the first half shaft is movably connected with the housing 1, and a second end thereof is fixedly provided with an eighth sun gear 8. The first half shaft is provided with a sixth gear 6 engaged with the fifth gear 5. The apparatus further includes a second half shaft coaxially arranged with the first half shaft, a first end of the second half shaft is operatively connected with the housing 1, and a second end of the second half shaft is fixedly provided with a tenth sun gear 10. The second half shaft is provided with a K2 clutch 16 and a K3 clutch 18, and is rotatably provided with a seventeenth gear 17 and a fifteenth gear 15. The seventeenth gear 17 is in power connection with a driving end of the K3 clutch 18. The fifteenth gear 15 is in power connection with a driving end of the K2 clutch 16. The apparatus further includes an eleventh planetary carrier 11 provided with a plurality of seventh planetary gears 7 and a plurality of ninth planetary gears 9. The seventh planetary gears 7 are in power connection with the eighth sun gear 8. The ninth planetary gears 9 are in power connection with the tenth sun gear 10. The eleventh planetary carrier 11 is fixedly connected with a K1 clutch 14. A driving end of the K1 clutch 14 is in power connection with the fifteenth gear 15. The apparatus further includes a first intermediate shaft arranged in and movably connected with the housing 1. The first intermediate shaft is movably provided with a nineteenth gear 19 and a twenty-first gear 21. The nineteenth gear 19 is engaged with the twenty-second gear 22, and the twenty-first gear 21 is engaged with the fifteenth gear 15. The first intermediate shaft is fixedly provided with a twenty-fourth gear 24 and a twenty-fifth gear 25, and the twenty-fourth gear 24 is engaged with the seventeenth gear 17, the twenty-fifth gear 25 is engaged with the twenty-ninth gear 29. The first intermediate shaft is further provided with a KV clutch 23, a driving end of the KV clutch 23 is engaged with the twenty-first gear 21. The apparatus further includes a second intermediate shaft, a twenty-eighth gear 28 fixedly arranged on the second intermediate shaft and a twenty-sixth gear 26 rotatably arranged on the second intermediate shaft. The twenty-eighth gear 28 is engaged with the twenty-ninth gear 29. The second intermediate shaft is further provided with a KR clutch 27, a driving end of the KR clutch 27 is engaged with the twenty-sixth gear 26. The apparatus further includes a twelfth gear 12 and a thirteenth gear 13 fixedly and coaxially arranged. The twelfth gear 12 is engaged with the ninth gears, and the thirteenth gear 13 is engaged with the nineteenth gear 19. The apparatus further includes an oil-replenishing pump 3 in power connection with the hydraulic pump 2, to provide the whole construction machinery with a required oil pressure for working and steering.

The hydro-mechanical continuously variable transmission apparatus with three ranges for construction machinery according to the present invention has shift logic as shown in the following table:

| Forward | I | K1, KV |
|---|---|---|
| | II | K2, KV |
| | III | K3 |
| Reverse | I | K1, KR |
| | II | K2, , KR |

The working principle of the hydro-mechanical continuously variable transmission apparatus with three ranges for construction machinery according to the present invention is further described by an example of the forward of the construction machinery.

The first range is a hydro-mechanical range I, an input power from the engine is input via the main input shaft 30. On the one hand, the input power is transmitted to the hydraulic pump 2 via the fifth gear 5 and the fourth gear 4. The hydraulic pump 2 and the hydraulic motor 20 form a closed circuit, and the hydraulic pump 2 is rotated to synchronously rotate the hydraulic motor 20. The oil-replenishing pump 3 is driven by the hydraulic pump 2 to operate, so as to provide the whole construction machinery with the required oil pressure for working and steering. On the other hand, the input power is transmitted to the eighth sun gear 8 via the sixth gear 6.

In this case, the K1 clutch 14 and the KV clutch 23 are both engaged. A power from the eighth sun gear 8 is transmitted to the K1 clutch 14 via the seventh planetary gears 7 and the ninth planetary gears 9. The fifteenth gear 15 is driven by the K1 clutch 14, so that the power from K1 clutch 14 is transmitted to the twenty-fifth gear 25 via the fifteenth gear 15, the twenty-first gear 21 and the KV clutch 23, and then to the main output shaft 31 via the twenty-fifth gear 25 and the twenty-ninth gear 29.

The second range is a hydro-mechanical range II, and when a gear position needs to be switched from the first range to the second range, due to the differential structure formed by the seventh planetary gears 7, the eighth sun gear 8, the ninth planetary gears 9 and the tenth sun gear 10, the K2 clutch 16 is engaged firstly, and then the K1 clutch 14 is separated, so as to ensure an uninterrupted output of the power and improve working efficiency.

Specifically, the input power from the engine is input via the main input shaft 30. On the one hand, the input power is transmitted to the hydraulic pump 2 via the fifth gear 5 and the fourth gear 4. The hydraulic pump 2 and the hydraulic motor 20 form a closed circuit. The hydraulic pump 2 is rotated to synchronously rotate the hydraulic motor 20. The oil-replenishing pump 3 is driven by the hydraulic pump 2 to operate, so as to provide the whole construction machinery with the required oil pressure for working and steering. On the other hand, the input power is transmitted to the eighth sun gear 8 via the sixth gear 6. A power from the eighth sun gear 8 is transmitted to the tenth sun gear 10 via the seventh planetary gears 7 and the ninth planetary gears 9, and then to the twenty-fifth gear 25 via the K2 clutch 16, the fifteenth gear 15, the twenty-first gear 21, and the KV 23, and in turn to the main output shaft 31 via the twenty-fifth gear 25.

The third range is the hydro-mechanical range III. In such range, only the K3 clutch 18 is engaged. The input power from the engine is input via the main input shaft 30. On the one hand, the input power is transmitted to the hydraulic pump 2 via the fifth gear 5 and the fourth gear 4. The hydraulic pump 2 and the hydraulic motor 20 form a closed circuit. The hydraulic pump 2 is rotated to synchronously rotate the hydraulic motor 20. The oil-replenishing pump 3 is driven by the hydraulic pump 2 to operate, so as to provide the whole construction machinery with the required oil pressure for working and steering. On the other hand, the input power is transmitted to the eighth sun gear 8 via the sixth gear 6. The power from the eighth sun gear 8 is transmitted to the tenth sun gear 10 via the seventh planetary gears 7 and the ninth planetary gears 9, and then to the main output shaft 31 via the K3 clutch 18, the seventeenth gear 17, the twenty-fourth gear 24 and the twenty-ninth gear 29.

In the above three-range gear positions, the power from engine is transmitted through both a mechanical path and a hydraulic path. The mechanical path is a power transmission among various gears and the clutch. The hydraulic path is a power transmission from the hydraulic pump 2 and the hydraulic motor 20 through the twenty-second gear 22, and then the nineteenth gear 19, the thirteenth gear 13 and the twelfth gear 12, to the ninth gears. Most of the power is transmitted through the mechanical path, and only a small part of the power is transmitted through the hydraulic pathway, thus the apparatus of the present invention enables a high transmission efficiency and a continuously variable transmission, and achieve technical effects of improved working efficiency and reduced fuel consumption of the engine.

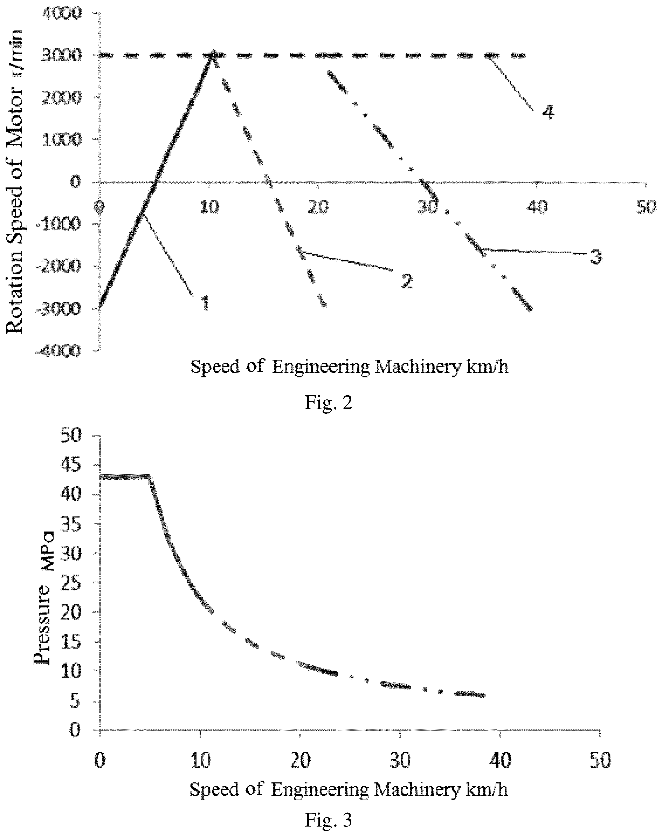

Fig. 2 is a plot of rotation speed of the hydraulic pump 2 and a variable motor. In this figure, curve 1 is a rotation speed of the variable motor in a pure hydraulic range, curve 2 is a rotation speed of the variable motor in a hydro-mechanical range I , curve 3 is a rotation speed of the variable motor in a hydro-mechanical range II, and curve 4 is a rotation speed of the hydraulic pump 2.

Fig. 3 is a plot of a maximum pressure of a hydraulic pump 2 of the present invention. In the figure, curve 1 represents a working pressure of the hydraulic pump 2 in the pure hydraulic range, curve 2 represents a working pressure of the hydraulic pump 2 in the hydro-mechanical range I, and a curve 3 represents a working pressure of the hydraulic pump 2 in the hydro-mechanical range II.

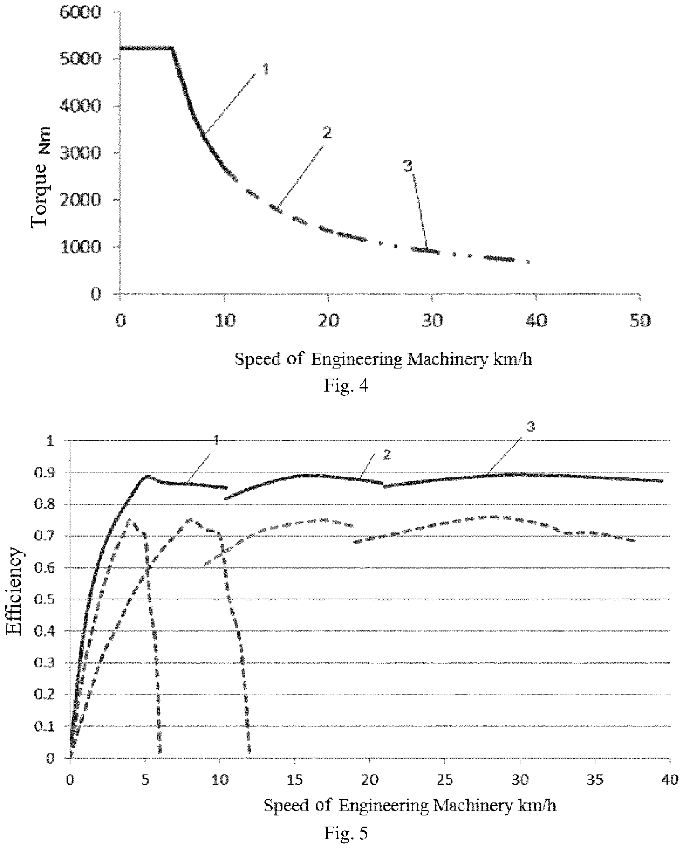

Fig. 4 is a plot of a maximum output torque of the present invention. In the figure, curve 1 represents a maximum output torque of the pure hydraulic range, curve 2 represents a maximum output torque of the hydro-mechanical range I, and curve 3 represents a maximum output torque of the hydro-mechanical range II.

Fig. 5 is a plot of efficiency of the present invention. In the figure, solid line 1 is an efficiency curve of the hydro-mechanical range I, solid line 2 is an efficiency curve of the hydro-mechanical range II, solid line 3 is an efficiency curve of the hydro-mechanical range III, and a dotted line is an efficiency curve of a conventional four-range hydro-mechanical power shift transmission of a loader.

The embodiments of the present invention are described in detail above with reference to the accompanying drawings. However, the present invention is not limited to the above-mentioned embodiments and is defined by the appended claims.

## Claims

1. A hydro-mechanical continuously variable transmission apparatus with three ranges for construction machinery, comprising a housing (1), a main input shaft (30), a main output shaft (31), a hydraulic pump (2) and a hydraulic motor (20), wherein
a first end of the main input shaft (30) is in power connection with an engine unit of the construction machinery, a second end of the main input shaft (30) is in power connection with a working pump (32); the main input shaft (30) penetrates through the housing (1), is movably connected with the housing (1), and is fixedly provided with a fifth gear (5);
the main output shaft (31) is configured to output power for running, working and steering of the construction machinery, is movably connected with the housing (1), and is fixedly provided with a twenty-ninth gear (29) gear;
a power input shaft of the hydraulic pump (2) is movably connected with the housing (1), a part of the power input shaft of the hydraulic pump (2) positioned within the housing (1) is fixedly provided with a fourth gear (4) engaged with the fifth gear (5);
a power output shaft of the hydraulic motor (20) is movably connected with the housing (1), and a part of the power output shaft of the hydraulic motor (20) positioned within the housing (1) is fixedly provided with a twenty-second gear (22);
the hydraulic pump (2) and the hydraulic motor (20) form a closed hydraulic circuit;
further comprising:
a first half shaft, a first end of the first half shaft movably connected with the housing (1), and a second end of the first half shaft fixedly provided with an eighth sun gear (8), the first half shaft provided with a sixth gear (6) engaged with the fifth gear (5);
a second half shaft, coaxially arranged with the first half shaft, a first end of the second half shaft movably connected with the housing (1), and a second end of the second half shaft fixedly provided with a tenth sun gear (10); the second half shaft provided with a K2 clutch (16) and a K3 clutch (18) and rotatably provided with a seventeenth gear (17) and a fifteenth gear (15), the seventeenth gear (17) being in power connection with a driving end of the K3 clutch (18), and the fifteenth gear (15) being in power connection with a driving end of the K2 clutch (16);
an eleventh planetary carrier (11), provided with a plurality of seventh planetary gears (7) and a plurality of ninth planetary gears (9), the seventh planetary gears (7) being in power connection with the eighth sun gear (8), and the ninth planetary gears (9) being in power connection with the tenth sun gear (10), the eleventh planetary carrier (11) fixedly connected with a K1 clutch (14), and a
driving end of the K1
clutch (14) being in power connection with the fifteenth gear (15);
a first intermediate shaft, arranged in and movably connected with the housing (1), the first intermediate shaft movably provided with a nineteenth gear (19) and a twenty-first gear (21), the nineteenth gear (19) engaged with the twenty-second gear (22), the twenty-first gear (21) engaged with the fifteenth gear (15), the first intermediate shaft fixedly provided with a twenty-fourth gear (24) and a twenty-fifth gear (25), the twenty-fourth gear (24) engaged with the seventeenth gear (17), the twenty-fifth gear (25) engaged with the twenty-ninth gear (29) gear, the first intermediate shaft further provided with a KV clutch (23), a driving end of the KV clutch (23) engaged with the twenty-first gear (21);
a second intermediate shaft, on which a twenty-eighth gear (28) gear is fixedly arranged and a twenty-sixth gear (26) gear is rotatably arranged, the twenty-eighth gear (28) gear engaged with the twenty-ninth gear (29) gear, the second intermediate shaft further provided with a KR clutch (27), a driving end of the KR clutch (27) engaged with the twenty-sixth gear (26); and
a twelfth gear (12) and a thirteenth gear (13), fixedly and coaxially arranged, the twelfth gear (12) engaged with the ninth gears, and the thirteenth gear (13) engaged with the nineteenth gear (19).

2. The hydro-mechanical continuously variable transmission apparatus with three ranges for construction machinery according to claim 1, further comprising an oil-replenishing pump (3) in power connection with the hydraulic pump (2).

## Patentansprüche

1. Hydromechanisches stufenloses Getriebe mit drei Fahrbereichen für Baumaschinen, umfassend ein Gehäuse (1), eine Haupteingangswelle (30), eine Hauptausgangswelle (31), eine Hydraulikpumpe (2) und einen Hydraulikmotor (20), wobei
ein erstes Ende der Haupteingangswelle (30) in Leistungsverbindung mit einer Motoreinheit der Baumaschine steht, ein zweites Ende der Haupteingangswelle (30) in Leistungsverbindung mit einer Arbeitspumpe (32) steht; die Haupteingangswelle (30) das Gehäuse (1) durchsetzt, beweglich mit dem Gehäuse (1) verbunden ist und starr mit einem fünften Zahnrad (5) versehen ist;
die Hauptausgangswelle (31) eingerichtet ist, um Leistung für das Laufen, Arbeiten und Lenken der Baumaschine abzugeben, beweglich mit dem Gehäuse (1) verbunden ist und starr mit einem neunundzwanzigsten Zahnrad (29) versehen ist;
eine Leistungseingangswelle der Hydraulikpumpe (2) beweglich mit dem Gehäuse (1) verbunden ist, ein innerhalb des Gehäuses (1) angeordneter Teil der Leistungseingangswelle der Hydraulikpumpe (2) starr mit einem mit dem fünften Zahnrad (5) in Eingriff stehenden vierten Zahnrad (4) versehen ist;
eine Leistungsausgangswelle des Hydraulikmotors (20) beweglich mit dem Gehäuse (1) verbunden ist, und ein innerhalb des Gehäuses (1) angeordneter Teil der Leistungsausgangswelle des Hydraulikmotors (20) starr mit einem zweiundzwanzigsten Zahnrad (22) versehen ist;
die Hydraulikpumpe (2) und der Hydraulikmotor (20) einen geschlossenen Hydraulikkreislauf bilden;
ferner umfassend:
eine erste Halbwelle, wobei ein erstes Ende der ersten Halbwelle beweglich mit dem Gehäuse (1) verbunden ist und ein zweites Ende der ersten Halbwelle starr mit einem achten Sonnenrad (8) versehen ist, die erste Halbwelle mit einem mit dem fünften Zahnrad (5) in Eingriff stehenden sechsten Zahnrad (6) versehen ist;
eine koaxial zu der ersten Halbwelle angeordnete zweite Halbwelle, wobei ein erstes Ende der zweiten Halbwelle beweglich mit dem Gehäuse (1) verbunden ist und ein zweites Ende der zweiten Halbwelle starr mit einem zehnten Sonnenrad (10) versehen ist; die zweite Halbwelle mit einer K2-Kupplung (16) und einer K3-Kupplung (18) versehen ist und drehbar mit einem siebzehnten Zahnrad (17) und einem fünfzehnten Zahnrad (15) versehen ist, das siebzehnte Zahnrad (17) in Leistungsverbindung mit einem Antriebsende der K3-Kupplung (18) steht, und das fünfzehnte Zahnrad (15) in Leistungsverbindung mit einem Antriebsende der K2-Kupplung (16) steht;
einen mit einer Vielzahl von siebten Planetenrädern (7) und einer Vielzahl von neunten Planetenrädern (9) versehenen elften Planetenträger (11), wobei die siebten Planetenräder (7) in Leistungsverbindung mit dem achten Sonnenrad (8) stehen und die neunten Planetenräder (9) in Leistungsverbindung mit dem zehnten Sonnenrad (10) stehen, der elfte Planetenträger (11) starr mit einer K1-Kupplung (14) verbunden ist und ein Antriebsende der K1-Kupplung (14) in Leistungsverbindung mit dem fünfzehnten Zahnrad (15) steht;
eine in dem Gehäuse (1) angeordnete und beweglich mit diesem verbundene erste Zwischenwelle, wobei die erste Zwischenwelle beweglich mit einem neunzehnten Zahnrad (19) und einem einundzwanzigsten Zahnrad (21) versehen ist, das neunzehnte Zahnrad (19) in Eingriff mit dem zweiundzwanzigsten Zahnrad (22) ist, das einundzwanzigste Zahnrad (21) in Eingriff mit dem fünfzehnten Zahnrad (15) ist, die erste Zwischenwelle starr mit einem vierundzwanzigsten Zahnrad (24) und einem fünfundzwanzigsten Zahnrad (25) versehen ist, das vierundzwanzigste Zahnrad (24) in Eingriff mit dem siebzehnten Zahnrad (17) ist, das fünfundzwanzigste Zahnrad (25) in Eingriff mit dem neunundzwanzigsten Zahnrad (29) ist, die erste Zwischenwelle ferner mit einer KV-Kupplung (23) versehen ist, ein Antriebsende der KV-Kupplung (23) in Eingriff mit dem einundzwanzigsten Zahnrad (21) ist;
eine zweite Zwischenwelle, auf der ein achtundzwanzigstes Zahnrad (28) starr angeordnet ist und ein sechsundzwanzigstes Getriebe (26) drehbar angeordnet ist, wobei das achtundzwanzigste Zahnrad (28) in Eingriff mit dem neunundzwanzigsten Zahnrad (29) ist, die zweite Zwischenwelle ferner mit einer KR-Kupplung (27) versehen ist, ein Antriebsende der KR-Kupplung (27) in Eingriff mit dem sechsundzwanzigsten Zahnrad (26) ist; und
ein zwölftes Zahnrad (12) und ein dreizehntes Zahnrad (13), die starr und koaxial angeordnet sind, wobei das zwölfte Zahnrad (12) in Eingriff mit den neunten Zahnrädern ist und das dreizehnte Zahnrad (13) in Eingriff mit dem neunzehnten Zahnrad (19) ist.

2. Hydromechanisches stufenloses Getriebe mit drei Fahrbereichen für Baumaschinen nach Anspruch 1, ferner umfassend eine mit der Hydraulikpumpe (2) in Leistungsverbindung stehende Ölauffüllpumpe (3).

## Revendications

1. Appareil de transmission à variation continue hydromécanique avec trois plages pour engin de chantier, comprenant un boîtier (1), un arbre d'entrée principal (30), un arbre de sortie principal (31), une pompe hydraulique (2) et un moteur hydraulique (20), dans lequel
une première extrémité de l'arbre d'entrée principal (30) est en liaison d'alimentation avec une unité de moteur de l'engin de chantier, une seconde extrémité de l'arbre d'entrée principal (30) est en liaison d'alimentation avec une pompe de travail (32) ; l'arbre d'entrée principal (30) pénètre à travers le boîtier (1), est relié de manière mobile au boîtier (1), et est pourvu de manière fixe d'un cinquième engrenage (5) ;
l'arbre de sortie principal (31) est configuré pour délivrer de la puissance pour le fonctionnement, le travail et la direction de l'engin de chantier, est relié de manière mobile au boîtier (1), et est pourvu de manière fixe d'un vingt-neuvième engrenage (29) ;
un arbre d'entrée d'alimentation de la pompe hydraulique (2) est relié de manière mobile au boîtier (1), une partie de l'arbre d'entrée d'alimentation de la pompe hydraulique (2) positionnée à l'intérieur du boîtier (1) est pourvue de manière fixe d'un quatrième engrenage (4) en prise avec le cinquième engrenage (5) ;
un arbre de sortie d'alimentation du moteur hydraulique (20) est relié de manière mobile au boîtier (1), et une partie de l'arbre de sortie d'alimentation du moteur hydraulique (20) positionnée à l'intérieur du boîtier (1) est pourvue de manière fixe d'un vingt-deuxième engrenage (22) ;
la pompe hydraulique (2) et le moteur hydraulique (20) forment un circuit hydraulique fermé ;
comprenant en outre :
un premier demi-arbre, une première extrémité du premier demi-arbre reliée de manière mobile au boîtier (1), et une seconde extrémité du premier demi-arbre pourvue de manière fixe d'un huitième engrenage planétaire (8), le premier demi-arbre pourvu d'un sixième engrenage (6) en prise avec le cinquième engrenage (5) ;
un second demi-arbre, agencé de manière coaxiale avec le premier demi-arbre, une première extrémité du second demi-arbre reliée de manière mobile au boîtier (1), et une seconde extrémité du second demi-arbre pourvue de manière fixe d'un dixième engrenage planétaire (10) ; le second demi-arbre pourvu d'un embrayage K2 (16) et d'un embrayage K3 (18) et pourvu de manière rotative d'un dix-septième engrenage (17) et d'un quinzième engrenage (15), le dix-septième engrenage (17) étant en liaison d'alimentation avec une extrémité d'entraînement de l'embrayage K3 (18), et le quinzième engrenage (15) étant en liaison d'alimentation avec une extrémité d'entraînement de l'embrayage K2 (16) ;
un onzième porte-satellites (11), pourvu d'une pluralité de septièmes engrenages satellites (7) et d'une pluralité de neuvièmes engrenages satellites (9), les septièmes engrenages satellites (7) étant en liaison d'alimentation avec le huitième engrenage planétaire (8), et les neuvièmes engrenages satellites (9) étant en liaison d'alimentation avec le dixième engrenage planétaire (10), le onzième porte-satellites (11) relié de manière fixe à un embrayage K1 (14), et une extrémité d'entraînement de l'embrayage K1 (14) étant en liaison d'alimentation avec le quinzième engrenage (15) ;
un premier arbre intermédiaire, agencé dans le boîtier (1) et relié de manière mobile à celui-ci, le premier arbre intermédiaire pourvu de manière mobile d'un dix-neuvième engrenage (19) et d'un vingt-et-unième engrenage (21), le dix-neuvième engrenage (19) en prise avec le vingt-deuxième engrenage (22), le vingt-et-unième engrenage (21) en prise avec le quinzième engrenage (15), le premier arbre intermédiaire pourvu de manière fixe d'un vingt-quatrième engrenage (24) et d'un vingt-cinquième engrenage (25), le vingt-quatrième engrenage (24) en prise avec le dix-septième engrenage (17), le vingt-cinquième engrenage (25) en prise avec le vingt-neuvième engrenage (29), le premier arbre intermédiaire pourvu en outre d'un embrayage KV (23), une extrémité d'entraînement de l'embrayage KV (23) en prise avec le vingt-et-unième engrenage (21) ;
un second arbre intermédiaire, sur lequel un vingt-huitième engrenage (28) est agencé de manière fixe et un vingt-sixième engrenage (26) est agencé de manière rotative, le vingt-huitième engrenage (28) en prise avec le vingt-neuvième engrenage (29), le second arbre intermédiaire pourvu en outre d'un embrayage KR (27), une extrémité d'entraînement de l'embrayage KR (27) en prise avec le vingt-sixième engrenage (26) ; et
un douzième engrenage (12) et un treizième engrenage (13), agencés de manière fixe et coaxiale, le douzième engrenage (12) en prise avec les neuvièmes engrenages, et le treizième engrenage (13) en prise avec le dix-neuvième engrenage (19).

2. Appareil de transmission à variation continue hydromécanique avec trois plages pour engin de chantier selon la revendication 1, comprenant en outre une pompe de remplissage d'huile (3) en liaison d'alimentation avec la pompe hydraulique (2).
